# EUROPEAN PATENT APPLICATION

(11) **EP 4 738 641 A1**
(43) Date of publication of application: **06.05.2026**
(21) Application number: 24847524.6
(22) Date of filing: 01.02.2024
(51) Int. Cl.: H02J 7/00, H01M 10/42

(54) **BATTERY PACK AND ENERGY STORAGE SYSTEM**

(30) Priority: 01.08.2023 CN 202310965046
(71) Applicant: Huawei Digital Power Technologies Co., Ltd., Shenzhen, Guangdong 518043 (CN)
(72) Inventor: WENG, Sai, Shenzhen, Guangdong 518043 (CN); WU, Yihong, Shenzhen, Guangdong 518043 (CN); GUO, Haibin, Shenzhen, Guangdong 518043 (CN)
(74) Representative: Isarpatent
(86) International application number: PCT/CN2024/075116
(87) International publication number: WO 2025/025555

(57) **Abstract**

A battery module and an energy storage system are provided. The battery module includes a battery pack, a DC/DC converter, a controller, and a voltage regulator circuit. The voltage regulator circuit includes a resistor, a capacitor, a first switch, and a second switch. A positive end of the DC/DC converter and one end of the capacitor are connected to a positive electrode of the battery pack through the first switch, a negative end of the DC/DC converter and the other end of the capacitor are connected to a negative electrode of the battery pack through the resistor, and the negative end and the other end of the battery-side capacitor are connected to the negative electrode of the battery pack through the second switch. The controller is configured to control the first switch to be turned on, control the second switch to be turned on after a preset condition is met, and control the DC/DC converter, where a voltage at the two ends of the capacitor when the preset condition is met is greater than a voltage at the two ends of the capacitor when the preset condition is not met. The second switch is turned on after the preset condition is met, so that a control delay of the DC/DC converter can be reduced.

## Description

This application claims priority to Chinese Patent Application No. 202310965046.6, filed with the China National Intellectual Property Administration on August 1, 2023 and entitled "BATTERY MODULE AND ENERGY STORAGE SYSTEM", which is incorporated herein by reference in its entirety.

### TECHNICAL FIELD

Embodiments of this application relate to the field of electric power technologies, and in particular, to a battery module and an energy storage system.

### BACKGROUND

In the fields of energy storage and the like, a direct current to direct current (direct current to direct current, DC/DC) converter is usually disposed in a battery module, and the DC/DC converter performs power conversion, for example, charging or discharging, on a battery pack included in the battery module.

To avoid damage to the DC/DC converter caused by voltage fluctuation of the battery pack, a voltage regulator circuit is usually disposed in the battery module. To be specific, a positive end and a negative end of the DC/DC converter are connected to two electrodes of the battery pack through the voltage regulator circuit, the voltage regulator circuit includes a capacitor, and the capacitor and the DC/DC converter are connected in parallel at the two electrodes of the battery pack through the voltage regulator circuit.

To enable the voltage regulator circuit to operate normally, before the DC/DC converter controls a battery, or in other words, before a control instruction used to control the DC/DC converter is received, the voltage regulator circuit needs to be conducted, so that the capacitor completes charging.

In the conventional technology, to ensure that a capacitor reliably completes charging, before a DC/DC converter is controlled, a voltage regulator circuit needs to be conducted in advance for long time. As a result, a control delay of the DC/DC converter is long.

### SUMMARY

Embodiments of this application provide a battery module and an energy storage system, to reduce a control delay of a DC/DC converter.

According to a first aspect, a battery module is provided. The battery module includes a battery pack, a DC/DC converter, a controller, and a voltage regulator circuit. The voltage regulator circuit includes a resistor, a capacitor, a first switch, and a second switch. A positive end of the DC/DC converter and one end of the capacitor are connected to a positive electrode of the battery pack through the first switch, a negative end of the DC/DC converter and the other end of the capacitor are connected to a negative electrode of the battery pack through the resistor, and the negative end and the other end of the battery-side capacitor are connected to the negative electrode of the battery pack through the second switch. The controller is configured to control the first switch to be turned on. After a preset condition is met, the controller controls the second switch to be turned on, where a voltage at the two ends of the capacitor after the preset condition is met is greater than a voltage at the two ends of the capacitor before the preset condition is met. The controller controls the DC/DC converter according to a control instruction.

The preset condition is used to determine whether a voltage value at the two ends of the capacitor meets a soft-start condition. In this case, that "the voltage value at the two ends of the capacitor meets the soft-start condition" or "the preset condition is met" may be understood as follows: A voltage value of the capacitor increases to a voltage value that enables the capacitor to effectively regulate and filter a current from the battery pack; or that "the voltage value at the two ends of the capacitor does not meet the soft-start condition" or "the preset condition is not met" may be understood as follows: A voltage value of the capacitor does not meet a requirement of voltage regulation processing and filtering processing. That is, in embodiments of this application, determining whether the preset condition is met is equivalent to determining whether the voltage value at the two ends of the capacitor meets the soft-start condition.

That is, when the preset condition is met, the charged capacitor can perform effective voltage regulation processing on the current from the battery pack, thereby effectively protecting the DC/DC converter. Therefore, compared with the conventional technology, this application can save time for waiting for the capacitor to complete charging, and reduce the control delay of the DC/DC converter.

In an implementation, the controller is further configured to: receive the control instruction dedicated to the DC/DC converter, and control the first switch to be turned on in response to the control instruction.

In the conventional technology, to protect a DC/DC converter, a controller needs to turn on a first switch and a second switch before receiving a control instruction dedicated to the DC/DC converter, to complete charging of a capacitor. As a result, although control on the DC/DC converter has not started, a loop between the DC/DC converter and a battery is conducted, and this causes extra loss to battery power. In contrast, in embodiments of this application, after the controller receives the control instruction dedicated to the DC/DC converter, the controller turns on the first switch and the second switch in sequence, after the first switch is turned on, the capacitor can be charged under protection of the resistor, and after the second switch is turned on, the charged capacitor can perform effective voltage regulation processing on the current from the battery pack, thereby effectively protecting the DC/DC converter. In addition, because the first switch and the second switch are turned off before the control instruction is received, this application can reduce battery power consumption compared with the conventional technology.

In an implementation, the preset condition corresponds to the voltage at the two ends of the capacitor, or in other words, an occasion for turning on the second switch is affected by the voltage at the two ends of the capacitor. The voltage at the two ends of the capacitor is detected, the second switch is turned on immediately after the voltage meets the preset condition, and power conversion is performed on the battery pack. This can reduce, on the premise of effectively protecting the DC/DC converter, a delay from receiving the control instruction to completing control, and further improve practicability of embodiments of this application.

For example, the preset condition includes: The voltage value at the two ends of the capacitor is greater than or equal to a first threshold.

Alternatively, the preset condition includes: A difference between a voltage value of the battery pack and the voltage value at the two ends of the capacitor is less than or equal to a second threshold.

In another implementation, the preset condition corresponds to duration for which the first switch is turned on. For example, the controller is further configured to: start a timer after the first switch is turned on, and control, after the timer expires, the second switch to be turned on, where timing duration of the timer is greater than or equal to first duration, and the first duration is duration in which the voltage value at the two ends of the capacitor changes from zero to a value that meets the soft-start condition. For example, the first duration may be determined in a manner like an experiment.

That is, the preset condition includes: Duration starting from time at which the first switch is turned on is greater than or equal to a third threshold.

Therefore, determining whether the voltage of the capacitor meets the soft-start condition can be converted into determining timing duration starting from the time at which the first switch is turned on, thereby reducing costs and configuration space overheads caused by configuring a voltage detection apparatus.

**In** addition, the controller is further configured to: obtain the voltage value of the battery pack; and determine a threshold in the preset condition based on the voltage value of the battery pack.

Because voltages of batteries are different, soft-start conditions that enable the capacitor to be capable of performing voltage regulation processing on currents from the batteries also change correspondingly, that is, the thresholds in the preset conditions also change correspondingly. Therefore, the threshold in the preset condition is determined based on the voltage of the battery, to further reduce the delay from receiving the control instruction to completing control.

It should be noted that the foregoing enumerated thresholds in the preset condition and a solution corresponding to a current voltage of the battery pack are merely examples for description, and this application is not limited thereto. For example, the threshold in the preset condition may alternatively be determined based on a maximum voltage value of the battery pack.

**In** a possible implementation, the battery module further includes an auxiliary power supply, the auxiliary power supply is configured to supply electric power to the controller in response to an excitation signal, and the controller is further configured to send a response instruction after the second switch is turned on, where the response instruction instructs to stop sending the excitation signal.

For example, a positive input end of the auxiliary power supply is connected to the positive electrode of the battery pack, a negative input end of the auxiliary power supply is connected to the negative electrode of the battery pack through an auxiliary power switch and the resistor in the voltage regulator circuit, and an output end of the auxiliary power supply is connected to the controller.

In this case, after the auxiliary power switch is turned off according to the response instruction, the resistor can be disconnected, thereby reducing power consumption generated by the resistor.

For another example, the auxiliary power supply has or is connected to a power supply independent of the battery, and the response instruction instructs to disconnect the auxiliary power circuit from the power supply.

**In** embodiments of this application, the auxiliary power supply is disposed to supply electric power to the controller, so that the controller can quickly respond when the DC/DC converter needs to be controlled, and turn off the first switch and the second switch in sequence, thereby completing control on the DC/DC converter.

According to a second aspect, an energy storage system is provided, including one or more battery clusters connected in parallel, where each battery cluster includes a plurality of battery modules, the plurality of battery modules are connected in series, and the battery module includes a battery pack, a DC/DC converter, a controller, and a voltage regulator circuit. The voltage regulator circuit includes a resistor, a capacitor, a first switch, and a second switch. A positive end of the DC/DC converter and one end of the capacitor are connected to a positive electrode of the battery pack through the first switch, a negative end of the DC/DC converter and the other end of the capacitor are connected to a negative electrode of the battery pack through the resistor, and the negative end and the other end of the battery-side capacitor are connected to the negative electrode of the battery pack through the second switch. The controller is configured to control the first switch to be turned on. After a preset condition is met, the controller controls the second switch to be turned on, where a voltage at the two ends of the capacitor after the preset condition is met is greater than a voltage at the two ends of the capacitor before the preset condition is met. The controller controls the DC/DC converter according to a control instruction.

In an implementation, each battery pack includes an output positive electrode (denoted as Vdc+) and an output negative electrode (denoted as Vdc-), and the battery pack includes a power control positive electrode (denoted as Vbat+) and a power control negative electrode (denoted as Vbat-).

A DC/DC converter of each battery module includes a first end and a second end.

In this case, that "the positive end of the DC/DC converter and one end of the capacitor are connected to the positive electrode of the battery pack through the first switch" may be understood as follows: A positive end at the first end of the DC/DC converter and one end of the capacitor are connected to Vbat+ of the battery pack through the first switch. That "the negative end of the DC/DC converter and the other end of the capacitor are connected to the negative electrode of the battery pack through the resistor, and the negative end and the other end of the battery-side capacitor are connected to the negative electrode of the battery pack through the second switch" may be understood as follows: A negative end at the first end of the DC/DC converter and the other end of the capacitor are connected to Vbat- of the battery pack through the resistor, and the negative end at the first end of the DC/DC converter and the other end of the battery-side capacitor are connected to Vbat- of the battery pack through the second switch.

The energy storage system further includes a positive bus Vbus+ and a negative bus Vbus-. A positive end at a second end of a DC/DC converter of each battery module is connected to Vbus+, and a negative end at the second end of the DC/DC converter of each battery module is connected to Vbus-.

A plurality of battery modules in a battery cluster are connected in series through Vdc+ and Vdc-, that is, Vdc+ of each battery module except a first battery module and a last battery module is connected to Vdc- of an adjacent battery module.

In an implementation, the controller is further configured to: receive the control instruction dedicated to the DC/DC converter, and control the first switch to be turned on in response to the control instruction.

In another implementation, the preset condition corresponds to a voltage at the two ends of the capacitor, or in other words, an occasion for turning on the second switch is affected by the voltage at the two ends of the capacitor.

For example, the preset condition includes: The voltage value at the two ends of the capacitor is greater than or equal to a first threshold.

Alternatively, the preset condition includes: A difference between a voltage value of the battery pack and the voltage value at the two ends of the capacitor is less than or equal to a second threshold.

In still another implementation, the preset condition corresponds to duration for which the first switch is turned on. For example, the controller is further configured to: start a timer after the first switch is turned on, and control, after the timer expires, the second switch to be turned on, where timing duration of the timer is greater than or equal to first duration, and the first duration is duration in which the voltage value at the two ends of the capacitor changes from zero to a value that meets the soft-start condition. For example, the first duration may be determined in a manner like an experiment.

That is, the preset condition includes: Duration starting from time at which the first switch is turned on is greater than or equal to a third threshold.

In addition, the controller is further configured to: obtain the voltage value of the battery pack; and determine a threshold in the preset condition based on the voltage value of the battery pack.

It should be noted that the foregoing enumerated thresholds in the preset condition and a solution corresponding to a current voltage of the battery pack are merely examples for description, and this application is not limited thereto. For example, the threshold in the preset condition may alternatively be determined based on a maximum voltage value of the battery pack.

In addition, the battery module further includes an auxiliary power supply, the auxiliary power supply is configured to supply electric power to the controller in response to an excitation signal, and the controller is further configured to send a response instruction after the second switch is turned on, where the response instruction instructs to stop sending the excitation signal.

For example, a positive input end of the auxiliary power supply is connected to the positive electrode Vbat+ of the battery pack, a negative input end of the auxiliary power supply is connected to the negative electrode Vbat- of the battery pack through an auxiliary power switch and the resistor in the voltage regulator circuit, and an output end of the auxiliary power supply is connected to the controller.

For another example, the auxiliary power supply has or is connected to a power supply independent of the battery, and the response instruction instructs to disconnect the auxiliary power circuit from the power supply.

### BRIEF DESCRIPTION OF DRAWINGS

FIG. 1 is a diagram of an electric power system according to an embodiment of this application;
FIG. 2 is a diagram of an example of an energy storage system according to an embodiment of this application;
FIG. 3 is a diagram of a structure of an example of a battery module according to an embodiment of this application;
FIG. 4 is a diagram of a structure of another example of an energy storage system according to an embodiment of this application;
FIG. 5 is a schematic flowchart of an example of a control process of a controller according to an embodiment of this application;
FIG. 6 is a diagram of a structure of another example of a battery module according to an embodiment of this application;
FIG. 7 is a diagram of a structure of still another example of a battery module according to an embodiment of this application;
FIG. 8 is a diagram of a structure of still another example of a battery module according to an embodiment of this application;
FIG. 9 is a schematic flowchart of another example of a control process of a controller according to an embodiment of this application; and
FIG. 10 is a schematic flowchart of still another example of a control process of a controller according to an embodiment of this application.

### DESCRIPTION OF EMBODIMENTS

The following describes technical solutions in embodiments of this application with reference to accompanying drawings in embodiments of this application. The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. It should be noted that a "connection" in embodiments of this application refers to an electrical connection, and a connection between two electrical elements may be a direct or indirect connection between the two electrical elements. For example, a connection between A and B may be a direct connection between A and B, or may be an indirect connection between A and B through one or more other electrical elements. For example, that A is connected to B may also be that A is directly connected to C, C is directly connected to B, A and B are connected through C.

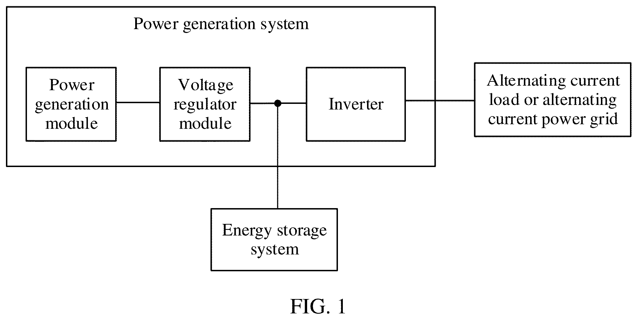

FIG. 1 is a diagram of an application scenario according to an embodiment of this application. As shown in FIG. 1, a power generation system in an electric power system generates an alternating current or a direct current, and supplies the alternating current to an alternating current power grid or an alternating current load. The power generation system may further supply the generated direct current to an energy storage system, and the energy storage system stores electrical energy. When electric power needs to be supplied to the alternating current load, the energy storage system may output a direct current. After being processed by a direct current to alternating current (direct current to alternating current, DC/AC) converter, the direct current is converted into an alternating current, and the alternating current is supplied to the alternating current load or the alternating current power grid.

The power generation system may be a new energy power generation system, for example, a wind power generation system or a photovoltaic power generation system.

The power generation system includes a power generation module, and the power generation module may generate a direct current or an alternating current. For example, a power generation module in the wind power generation system usually generates an alternating current, and a power generation module in the photovoltaic power generation system usually generates a direct current.

The power generation system further includes a voltage regulator module, and the voltage regulator module may regulate a voltage output by the power generation module. If a current output by the power generation module is an alternating current, the voltage regulator module is further configured to convert the alternating current into a direct current. In an example, a voltage regulator module in the wind power generation system is usually an AC/DC converter, and a voltage regulator module in the photovoltaic power generation system is usually a direct current to direct current (direct current to direct current, DC/DC) converter.

The power generation system further includes an inverter. The inverter is usually disposed between the voltage regulator module and the alternating current load (or the alternating current power grid), and can implement direct current to alternating current conversion. The inverter may also be a DC/AC converter.

A direct current end of the inverter is configured to receive a direct current, and an alternating current end of the inverter is configured to connect to the alternating current load or the alternating current power grid. The inverter may implement DC/AC conversion in a direction from the direct current end to the alternating current end, and supply an obtained alternating current to the alternating current load or the alternating current power grid.

In addition, the direct current end of the inverter is further connected to the energy storage system, to output a direct current to the energy storage system.

In addition, the inverter may also implement AC/DC conversion in a direction from the alternating current end to the direct current end. For example, when the alternating current end is connected to the alternating current power grid, the inverter may convert an alternating current input by the alternating current power grid into a direct current, and supply the direct current to the energy storage system.

For example, in the photovoltaic power generation system, the inverter may be a DC/AC converter in a photovoltaic inverter.

The photovoltaic inverter is a special inverter designed for the photovoltaic power generation system. A core of photovoltaic power generation is to convert solar energy into electrical energy by using a photovoltaic component (namely, a solar energy battery panel). However, because the photovoltaic component can generate only a direct current, the photovoltaic inverter needs to convert the direct current into an alternating current, to facilitate transmission and use of electric power.

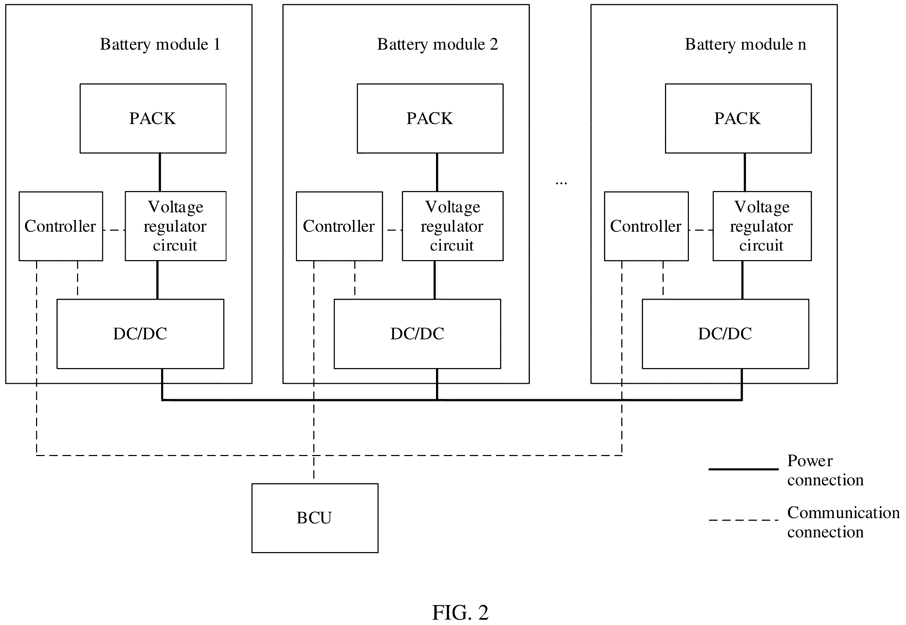

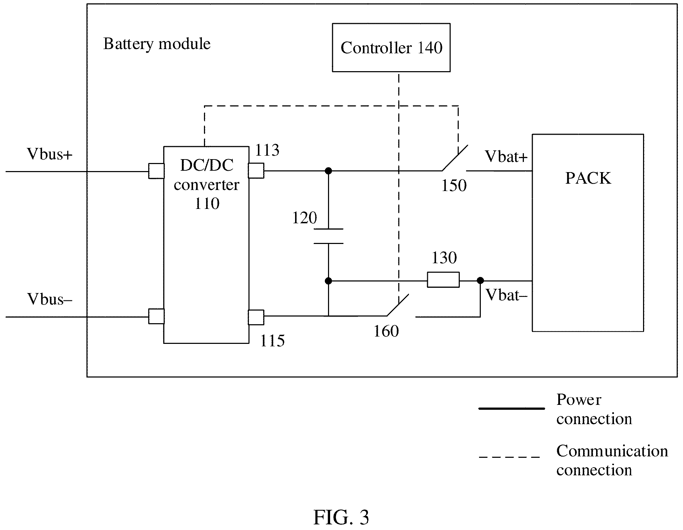

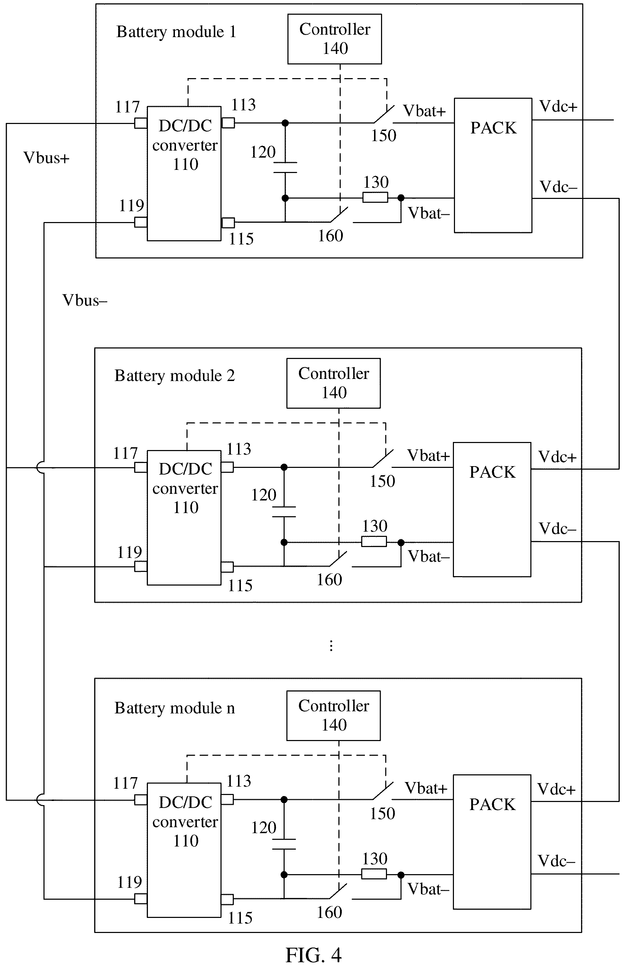

In this embodiment of this application, the energy storage system includes one or more battery clusters, and when the energy storage system includes the plurality of battery clusters, the plurality of battery clusters are connected in parallel. FIG. 2 shows a structure of a battery cluster. As shown in FIG. 2, one battery cluster includes a plurality of battery modules. Each battery module includes a battery pack (PACK), a DC/DC converter, a controller, and a voltage regulator circuit. There is a power connection (or an electrical connection) between the DC/DC converter and the battery pack in each battery module, and the DC/DC converter performs power control, that is, charging or discharging, on the battery pack through a power link (or a power connection). In addition, a power connection is implemented, for example, through a bus, between DC/DC converters of the battery modules, so that electricity flow between battery packs of the battery modules can be implemented through the DC/DC converters. There is a communication link (or a communication connection) between the controller and the DC/DC converter. The controller can send a control signal to the DC/DC converter (for example, a switch component in the DC/DC converter) through the communication link, to control an operation of the DC/DC converter, and further control charging or discharging of the battery pack. The following describes, with reference to FIG. 3, functions and connection relationships of components in the battery module in detail. In addition, battery modules in a same battery cluster are connected in series. The following describes, with reference to FIG. 4, a series connection manner in detail.

In an implementation, each battery module may further include a battery management unit (battery management unit, BMU), and the energy storage system further includes a battery control unit (battery control unit, BCU). There is a communication link (or a communication connection) between the BCU and a controller in each battery module. The BCU sends a control instruction to the controller through the communication link, to implement, through the controller and a DC/DC converter, power control that is on a battery pack and that is instructed by the control instruction. There is a communication connection between the BCU and a BMU in each battery module. The BMU is configured to: monitor information such as a voltage and a temperature of a PACK, and report the foregoing information to the BCU. The BCU monitors the battery pack in the energy storage system based on the foregoing information, generates a control instruction, and delivers the control instruction to the controller.

A PACK in embodiments of this application may be a single storage battery, or may be a battery cluster including a plurality of storage batteries. Specifically, the storage battery may alternatively be one or more combinations of a lead carbon battery, a lithium iron phosphate battery, a ternary lithium battery, a sodium sulfur battery, or a flow battery.

FIG. 3 shows a diagram of a structure of a battery module according to an embodiment of this application. As shown in FIG. 3, the battery module includes a controller 140, a DC/DC converter 110, a voltage regulator circuit, and a PACK. The voltage regulator circuit includes a capacitor 120, a resistor 130, a first switch 150, and a second switch 160.

It should be noted that the battery module provided in this embodiment of this application may further include another module or component according to an actual requirement. For example, the battery module may further include the foregoing BMU.

The controller 140 has a signal transceiver apparatus (not shown in the figure); and can receive a control instruction (for example, a control instruction from a BCU), and perform power conversion processing on a battery according to the control instruction. The controller 140 may be a general-purpose central processing unit (central processing unit, CPU), a general-purpose processor, a digital signal processor (digital signal processing, DSP), an application-specific integrated circuit (application-specific integrated circuit, ASIC), a field programmable gate array (field programmable gate array, FPGA) or another programmable logic device, a transistor logic device, a hardware component, or any combination thereof. The controller 140 may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor.

For example, the first switch 150 and the second switch 160 may be switching devices such as relays, insulated gate bipolar transistors (insulated gate bipolar transistor, IGBT), or metal-oxide-semiconductor field-effect transistors (metal-oxide-semiconductor field-effect transistor, MOS). In addition, in this embodiment of this application, the controller 140 can control on/off of the first switch 150 and the second switch 160. For example, there is a communication connection between the controller 140 and the first switch 150 and between the controller 140 and the second switch 160, and the controller 140 may send a control signal to the first switch 150 and the second switch 160 through the communication connection, to control on/off of the first switch 150 and the second switch 160.

The following describes a connection relationship (which is specifically a power connection relationship) between components in the battery module.

One end of the DC/DC converter 110 is configured to connect to the battery pack, and the other end of the DC/DC converter 110 is configured to connect to a bus of the energy storage system. Therefore, the DC/DC converter 110 can perform power conversion processing on a current input from the bus, and input a processed current into the battery pack, to charge the battery pack.

In addition, the DC/DC converter 110 can perform power conversion processing on a current input from the battery pack, and input a processed current to the bus, to discharge the battery pack.

One end that is of the DC/DC converter 110 and that is configured to connect to the battery pack includes a positive end 113 and a negative end 115. The positive end 113 is connected to a positive electrode of the PACK through the first switch 150, and the negative end 115 is connected to a negative electrode of the PACK through the second switch 160. In this way, a second loop is formed, to be specific, in the second loop, the DC/DC converter 110 and the capacitor 120 are connected in parallel and then directly connected to two electrodes of the battery pack.

One end (denoted as an end A for ease of understanding and description) of the capacitor 120 is connected to the positive electrode of the PACK through the switch 150, and the other end (denoted as an end B for ease of understanding and description) of the capacitor 120 is connected to the negative electrode of the PACK through the resistor 130. In addition, the end A of the capacitor 120 is connected to the positive end 113 of the DC/DC converter 110, and the end B of the capacitor 120 is connected to the negative end 115 of the DC/DC converter 110. In this way, a first loop is formed, to be specific, in the first loop, the DC/DC converter 110 and the capacitor 120 are connected in parallel and then connected in series to the resistor 130, and are further connected to the two electrodes of the battery pack.

When the first switch 150 is turned on and the second switch 160 is turned off, the first loop is conducted, the capacitor 120 is charged through a current from a battery, and a voltage at the two ends of the capacitor 120 increases. In addition, due to current limiting effect (or shunting effect) of the resistor 130, the capacitor 120 and the first switch 150 are not destroyed due to an excessive current from the battery.

When the first switch 150 is turned on and the second switch 160 is turned on, the second loop is conducted, and the capacitor 120 and the DC/DC converter 110 are connected in parallel to the two electrodes of the battery pack. In this way, the capacitor 120 can perform voltage regulation processing and filtering processing on a current from the PACK, to protect the DC/DC converter 110.

FIG. 4 shows an example of a connection relationship between battery modules having the structure shown in FIG. 3 in the energy storage system. As shown in FIG. 4, each PACK includes an output end that is configured to output a direct current to the outside, and the output end includes an output positive electrode Vdc+ and an output negative electrode Vdc-. In addition, PACKs are connected in series through Vdc+ and Vdc-.

In addition, each PACK includes a power control positive electrode Vbat+ and a power control negative electrode Vbat- that are used for power control. In this case, the positive end 113 is connected to Vbat+ of the PACK through the first switch 150, and the negative end 115 is connected to Vbat- of the PACK through the second switch 160. In addition, the end A of the capacitor 120 is connected to Vbat+ of the PACK through the switch 150, the end B of the capacitor 120 is connected to Vbat- of the PACK through the resistor 130, the end A of the capacitor 120 is connected to the positive end 113 of the DC/DC converter 110, and the end B of the capacitor 120 is connected to the negative end 115 of the DC/DC converter 110.

A bus of the energy storage system includes a positive bus Vbus+ and a negative bus Vbus-. One end that is of the DC/DC converter 110 and that is configured to connect to the bus includes a positive end 117 and a negative end 119, the positive end 117 is connected to Vbus+, and the negative end 119 is connected to Vbus-.

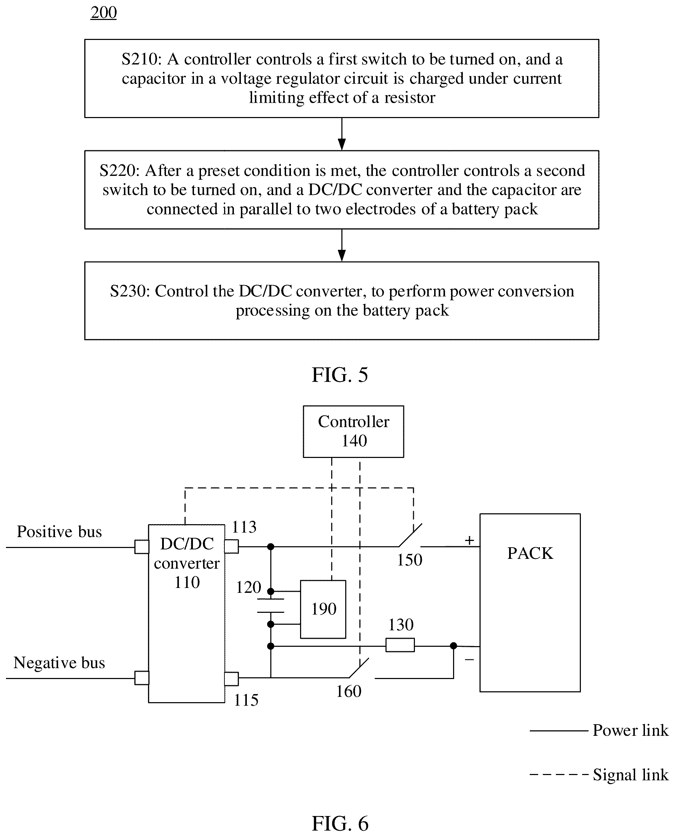

The following describes a control process of the controller 140 with reference to FIG. 5.

FIG. 5 shows a schematic flowchart 200 of an operating process of the controller 140 according to this application. In a non- operating state, both the first switch 150 and the second switch 160 are in a turned-off state, or both the first loop and the second loop are in a non-conducted state.

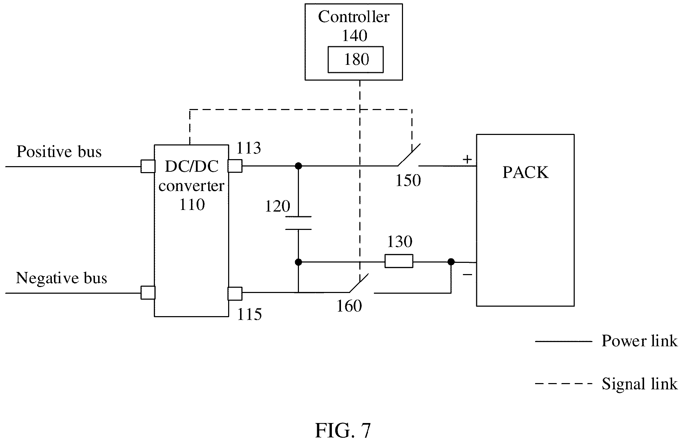

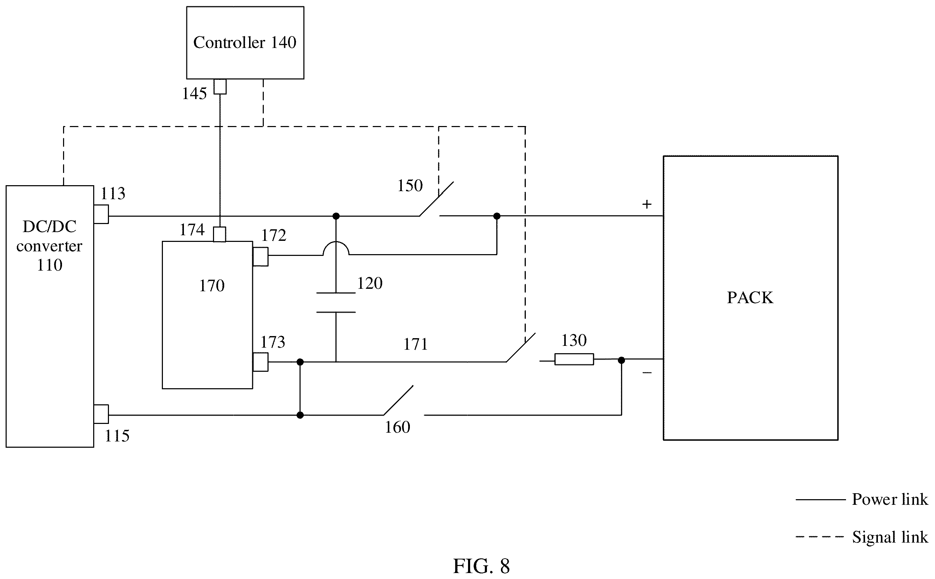

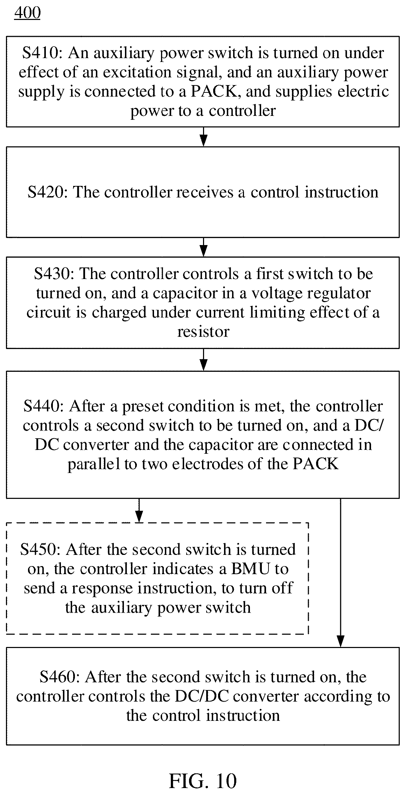

To control the first switch 150 and the second switch 160 by using the controller 140, electric power needs to be supplied to the controller 140. In a possible implementation, an independent power supply may be configured for the controller 140. In another possible manner, as shown in FIG. 7, an auxiliary power supply 170 powered by the PACK may be disposed in a battery module. The following describes in detail, with reference to FIG. 8 and FIG. 10, a specific structure and a power conversion processing process of the battery module with the auxiliary power supply 170.

As shown in FIG. 5, in S210, the controller 140 controls the first switch 150 to be turned on. In this case, the first loop is conducted, the capacitor 120 and the resistor 130 are connected in series to the two electrodes of the battery, and the capacitor 120 starts charging under current limiting effect of the resistor 130.

In S220, after determining that a preset condition is met (or determining that the capacitor 120 meets a soft-start condition), the controller 140 controls the second switch 160 to be turned on. In this case, the second loop is conducted.

The soft-start condition is used to protect the capacitor 120, the first switch 150, and the second switch 160. To be specific, after the capacitor 120 meets the soft-start condition, a voltage value at the two ends of the capacitor 120 meets: After the second switch 160 is turned on, the capacitor 120, the first switch 150, and the second switch 160 are not burnt due to an excessive current from the battery. The following describes the preset condition and the soft-start condition in detail.

In S230, the controller 140 controls the DC/DC converter 110, to implement power conversion processing on the PACK.

The following describes in detail manners in which the controller 140 determines whether the capacitor 120 meets the soft-start condition (or whether the preset condition is met).

### Manner 1

The preset condition is: Whether the voltage value at the two ends of the capacitor 120 is greater than a first threshold.

FIG. 6 shows diagram of a structure of another example of a battery module according to an embodiment of this application. As shown in FIG. 6, the battery module further includes a first sensor 190, and the first sensor 190 is configured to detect a voltage (denoted as V1 below for ease of understanding and description) at the two ends of the capacitor 120.

The first sensor 190 is in a communication connection to the controller 140, so that the controller 140 can monitor V1 by using the first sensor 190.

Therefore, when V1 satisfies: V1>a, the controller 140 determines that the capacitor 120 meets the soft-start condition, and controls the second switch 160 to be turned on, where a represents the first threshold.

For example, a may be a maximum voltage value of the PACK.

Alternatively, a=m*b, where b is the maximum voltage value of the PACK, and m is a specified proportion. For example, when the maximum voltage value b of the PACK is 200 V, a value of m may be 80% to 85%. In addition, the value of m is positively correlated to a value of b, in other words, a larger value of b indicates a larger value of m. For example, when the value of b is 1000 V, the value of m may be 90% to 95%.

In an implementation, the maximum voltage value of the PACK may be preset in the controller 140.

In another implementation, a sensor that is configured to detect the maximum voltage value of the PACK may be further disposed in the battery module, so that the controller 140 can obtain the maximum voltage value of the PACK from the sensor.

### Manner 2

The preset condition is: Whether a difference between a maximum voltage value of the PACK and the voltage value at the two ends of the capacitor 120 is less than or equal to a second threshold.

Similar to that in Manner 1, the controller 140 monitors V1 by using the first sensor 190.

Different from that in Manner 1, when V1 satisfies: b-V1≤c, the controller 140 determines that the capacitor 120 meets the soft-start condition, and controls the second switch 160 to be turned on.

b represents the maximum voltage value of the PACK, and c represents the second threshold.

c is a preset constant. For example, c and b may be in a proportional relationship. For example, when a value of b is 200 V, a value of c may be 15%*b to 20%*b; or when the value of b is 1000 V, the value of c may be 5%*b to 10%*b.

### Manner 3

The preset condition is: Whether the voltage value at the two ends of the capacitor 120 reaches a specified proportion of a current voltage value of the PACK.

Alternatively, the preset condition may be understood as whether the voltage value at the two ends of the capacitor 120 is greater than the first threshold, and a value of the first threshold is the specified proportion of the current voltage value of the PACK.

Similar to Manner 1, the controller 140 monitors V1 by using the first sensor 190.

Different from Manner 1, the controller 140 may further obtain a current voltage (denoted as V2 below for ease of understanding and description) of the PACK.

In a possible implementation, the battery module further includes a second sensor (not shown in the figure), and the second sensor is configured to detect the voltage V2 of the PACK. The second sensor is in communication connection to the controller 140, so that the controller 140 can monitor V2 by using the second sensor. The first sensor and the second sensor may be a same sensor, or may be different sensors. This is not particularly limited in this application.

In another possible implementation, a receiving apparatus of the second sensor may receive a signal from an external sensor (not shown in the figure) that is configured to detect a voltage of the PACK, so that the controller 140 can parse the signal to obtain V2.

Further, the controller 140 may compare V1 with V2 (that is, an example of the first threshold). When V1≥k*V2, the controller 140 determines that the capacitor 120 meets the soft-start condition, and controls the second switch 160 be turned on.

Compared with the solution in Manner 1, because the current voltage of the PACK may not be a maximum voltage, the soft-start condition in Manner 2 is easier to meet. Therefore, compared with Manner 1, Manner 2 can reduce a delay from receiving a control instruction to controlling the PACK according to the control instruction, and further improve practicability of embodiments of this application.

The following describes a value of k in detail.

In an implementation, the value of k may be a fixed value, for example, 80%.

Alternatively, there is a correspondence between the value of k and a maximum voltage of the PACK. For example, a larger maximum voltage of the PACK indicates a larger value of k. For example, when the maximum voltage of the PACK is 200 V, the value of k may be 80%; or when the maximum voltage of the PACK is 1000 V, the value of k may be 90%.

In another implementation, there is a correspondence between the value of k and a current voltage of the PACK. For example, a larger current voltage of the PACK indicates a larger value of k. For example, when the current voltage of the PACK is 200 V, the value of k may be 80%; or when the current voltage of the PACK is 1000 V, the value of k may be 90%.

The value k is determined based on a current voltage value of the PACK, and then a threshold that is used to determine whether the capacitor 120 meets the soft-start condition is further determined. This can further reduce a delay from receiving a control instruction to controlling the PACK according to the control instruction, and further improve practicability of embodiments of this application.

### Manner 4

The preset condition is: Whether a difference between a current voltage value of the PACK and the voltage value at the two ends of the capacitor 120 is less than or equal to a second threshold.

Similar to Manner 3, the controller 140 monitors V1 by using the first sensor 190, and the controller 140 obtains a current voltage V2 of the battery.

Different from Manner 3, when determining that V2-V1≤t*V2, the controller 140 determines that the capacitor 120 meets the soft-start condition, and controls the second switch 160 to be turned on.

In this case, t*V2 represents the second threshold.

The following describes a value of t in detail.

In an implementation, the value of t may be a fixed value, for example, 20%.

Alternatively, there is a correspondence between the value of t and a maximum voltage of the PACK. For example, a larger maximum voltage of the PACK indicates a smaller value of t. For example, when the maximum voltage of the PACK is 200 V, the value of t may be 20%; or when the maximum voltage of the PACK is 1000 V, the value of k may be 10%.

In another implementation, there is a correspondence between the value of t and a current voltage of the PACK. For example, a larger current voltage of the PACK indicates a smaller value of t. For example, when the current voltage of the PACK is 200 V, the value of t may be 20%; or when the current voltage of the PACK is 1000 V, the value of t may be 10%.

The value t is determined based on a current voltage value of the PACK, and then a threshold that is used to determine whether the capacitor 120 meets the soft-start condition is further determined. This can further reduce a delay from receiving a control instruction to controlling the PACK according to the control instruction, and further improve practicability of embodiments of this application.

### Mₐₙₙₑᵣ 5

The preset condition is: Duration starting from time at which the first switch 150 is turned on is greater than or equal to a third threshold.

FIG. 7 shows a diagram of a structure of another example of a battery module according to an embodiment of this application. As shown in FIG. 7, the battery module further includes a timer 180.

In addition, duration of the timer 180 is x, and a value of x is greater than or equal to duration (that is, an example of the third threshold) in which a voltage value 0 at the two ends of the capacitor 120 changes to a value that meets the soft-start condition.

In an implementation, the soft-start condition may be a condition recorded in the foregoing Manner 1 or Manner 2. In this case, first duration is a fixed value. In addition, the value of x may be obtained based on historical data, experiments, or the like. For example, the first duration is positively correlated to a maximum voltage value of the PACK. That is, a larger maximum voltage value of the PACK indicates longer first duration.

In another implementation, the soft-start condition may be a condition recorded in the foregoing Manner 3 or Manner 4. In this case, the first duration may be determined based on a current voltage of the PACK. For example, correspondences between a plurality of types of duration and a plurality of types of voltages may be stored in the controller 140 in advance, the correspondences may be obtained based on historical data, experiments, or the like. Therefore, the controller 140 may determine, from the correspondences, duration corresponding to V2 as the first duration based on the current voltage V2 of the PACK. For example, the first duration is positively correlated to a current voltage value of the battery. That is, a larger current voltage value of the battery indicates longer first duration.

Therefore, after controlling the first switch 150 to be turned on, the controller 140 starts the timer 180, and controls the second switch 160 to be turned on after the timer 180 expires (in this case, the capacitor 120 meets the soft-start condition).

The duration of the timer is determined based on the current voltage value of the PACK. This can reduce a delay from receiving a control instruction to controlling the battery according to the control instruction, and further improve practicability of embodiments of this application.

As described above, whether the capacitor meets the preset condition is detected, and the second loop is conducted when it is determined that the capacitor meets the preset condition, so that the DC/DC converter is controlled immediately after the capacitor can reliably perform voltage regulation processing. Therefore, compared with the conventional technology, this application can save time for waiting for the capacitor to complete charging, and reduce a control delay of the DC/DC converter.

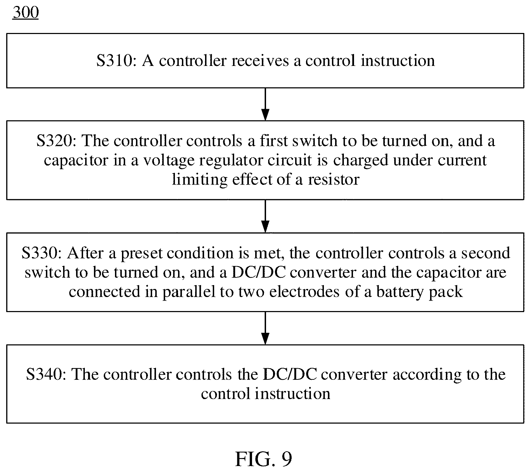

FIG. 9 shows a schematic flowchart 300 of an operating process of the controller 140 according to this application. Different from the flowchart 400 shown in FIG. 5, as shown in FIG. 9, in S310, the controller 140 (for example, from a BCU) receives a control instruction, and the control instruction is used to control an operation of the DC/DC converter 110, to perform power conversion processing on the PACK. Power conversion processing may be various processing such as boosting and bucking. This is not particularly limited in embodiments of this application.

In S320, after receiving the control instruction, the controller 140 controls the first switch 150 to be turned on.

A specific process of S330 and S340 is similar to a specific process of S220 and S230. Details are not described herein again.

After receiving the control instruction dedicated to a battery, the controller 140 sequentially conducts the first loop and the second loop. In one aspect, the capacitor 120 and the first switch 150 can be effectively protected by using the resistor 130 in the first loop. In another aspect, voltage regulation processing can be performed on a current from the battery by using the capacitor 120 and the current is transmitted to the DC/DC converter 110 by using the second loop, so that the DC/DC converter 110, the first switch 150, and the second switch 160 can be effectively protected. In addition, because the first loop and the second loop are not conducted before the control instruction is received, this manner can reduce battery power consumption compared with the conventional technology. Therefore, power consumption of the battery can be reduced while the DC/DC converter is protected.

The foregoing structure and power control process of the battery module are merely examples, and embodiments of this application are not limited thereto. With reference to FIG. 8 and FIG. 10, the following describes in detail a specific structure and a power conversion processing process of the battery module with the auxiliary power supply 170.

FIG. 8 shows a diagram of a structure of a battery module according to another embodiment of this application. As shown in FIG. 8, a difference between the battery module and the battery module in FIG. 1 lies in that the auxiliary power supply 170 and an auxiliary power switch 171 are disposed in the battery module in FIG. 8.

The auxiliary power supply 170 includes a positive input end 172, a negative input end 173, and an output end 174. The positive input end 172 is connected to the positive electrode Vbat+ of the PACK, and the negative input end 173 is connected to the negative electrode Vbat- of the PACK through the resistor 130. In this way, a third loop is formed. The auxiliary power supply 170 is configured to: perform processing such as voltage regulation on currents input from the positive input end 172 and the negative input end 173, and output processed currents from the output end 174. The output end 174 is connected to an end 145 of the controller. That is, a current output from the output end 174 is supplied to the controller 140, so that the controller 140 operates.

For example, the auxiliary power switch 171 may be a switch component such as a relay, an IGBT, or a MOS. In addition, in this embodiment of this application, the auxiliary power switch 171 is controlled by an external device (for example, a BCU). In an implementation, the external device is directly in communication connection to the auxiliary power switch 171. In another implementation, the external device may communicate with the auxiliary power switch 171 through a BMU, so that the external device may send an excitation signal to the auxiliary power switch 171 by using the foregoing communication connection, to control on/off of the auxiliary power switch 171.

With reference to FIG. 10, the following describes a control process of the controller in the battery module with the structure shown in FIG. 8.

FIG. 10 is a schematic flowchart of an operating process of another controller according to this application. In a non-operating state, both the first switch 150 and the second switch 160 are in a turned-off state, and the auxiliary power switch 171 is in a turned-off state, or in other words, the first loop, the second loop, and the third loop are all in a non-conducted state.

As shown in FIG. 10, in S410, the auxiliary power switch 171 receives an excitation signal, and is turned on under effect of the excitation signal. In this way, the third loop is conducted. Therefore, the auxiliary power supply 170 receives a current from the PACK through the third loop, performs processing such as voltage regulation on the current, and inputs a processed current to the controller 140. The controller 140 is started under electric power supplied from the auxiliary power supply 170, so that the controller 140 can receive a control instruction by using a signal transceiver apparatus. In an implementation, the auxiliary power switch 171 may be a normally turned-on switch, and is turned on when receiving a high-level signal. In this case, the excitation signal may be a high-level signal, and to maintain the auxiliary power switch 171 in a turned-on state, an external device (for example, a BCU) needs to continuously output the excitation signal.

In S420, the controller 140 receives the control instruction, where the control instruction is used to control the DC/DC converter 110.

A specific process of S430 and S440 is similar to a specific process of S220 and S230. Details are not described herein again.

In a possible implementation, in S450, after the first loop and the second loop are conducted, the controller 140 can perform power conversion processing based on the electric power supplied from the PACK. In this case, the controller 140 may send a response instruction to the external device, where the response instruction instructs the external device to stop sending the excitation signal. When the excitation signal stops, the auxiliary power switch 171 is turned off, and then the resistor 130 is disconnected in a soft-start manner. This avoids consumption of electric energy of the battery by soft-starting the resistor, and further improves practicability of the battery module in this embodiment of this application.

In S460, the controller 140 controls the DC/DC converter according to the control instruction.

In addition, the first sensor 190 in FIG. 6 and the timer 180 in FIG. 7 may also be applicable in the battery module in FIG. 8. An applicable manner is consistent with that in the embodiments in FIG. 6 and FIG. 7. Details are not described herein again.

It should be understood that specific examples in the foregoing embodiments are merely intended to help a person skilled in the art better understand embodiments of this application, but are not intended to limit the scope of embodiments of this application. It should be understood that sequence numbers of the foregoing processes do not mean execution sequences. The execution sequences of the processes should be determined according to functions and internal logic of the processes, and should not be construed as any limitation on the implementation processes of embodiments of this application.

It should be further understood that, in embodiments, unless otherwise stated or there is a logic conflict, terms and/or descriptions in different embodiments are consistent and may be mutually referenced, and technical features in different embodiments may be combined based on an internal logical relationship thereof, to form a new embodiment.

A person skilled in the art should be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

An embodiment of this application further provides a computer-readable storage medium. The computer-readable storage medium stores computer instructions used to implement the methods performed by the controller in the foregoing method embodiments.

For example, when a computer program is executed by a computer, the computer is enabled to implement the methods performed by the controller in the foregoing method embodiments.

An embodiment of this application further provides a computer program product including instructions. When the instructions are executed by a computer, the computer is enabled to implement the methods performed by the controller in the foregoing method embodiments.

For explanations and beneficial effects of related content of any one of the devices provided above, refer to corresponding method embodiments provided above. Details are not described herein again.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be another division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A battery module, comprising:
a battery pack, a direct current to direct current DC/DC converter, a controller, and a voltage regulator circuit, wherein the voltage regulator circuit comprises a resistor, a capacitor, a first switch, and a second switch, a positive end of the DC/DC converter and one end of the capacitor are connected to a positive electrode of the battery pack through the first switch, a negative end of the DC/DC converter and the other end of the capacitor are connected to a negative electrode of the battery pack through the resistor, and the negative end and the other end of the battery-side capacitor are connected to the negative electrode of the battery pack through the second switch; and
the controller is configured to:
control the first switch to be turned on; and
when a preset condition is met, control the second switch to be turned on, and control the DC/DC converter, wherein a voltage at the two ends of the capacitor when the preset condition is met is greater than a voltage at the two ends of the capacitor when the preset condition is not met.

2. The battery module according to claim 1, wherein the preset condition comprises any one of the following conditions:
a voltage value at the two ends of the capacitor is greater than or equal to a first threshold;
a difference between a voltage value of the battery pack and the voltage value at the two ends of the capacitor is less than or equal to a second threshold; and
duration starting from time at which the first switch is turned on is greater than or equal to a third threshold.

3. The battery module according to claim 1 or 2, wherein the controller is further configured to:
obtain the voltage value of the battery pack; and
determine the preset condition based on the voltage value of the battery pack.

4. The battery module according to any one of claims 1 to 3, wherein
the battery module further comprises an auxiliary power supply, and the auxiliary power supply supplies electric power to the controller in response to an excitation signal; and
the controller is further configured to send a response instruction after the second switch is turned on, wherein the response instruction instructs to stop sending the excitation signal.

5. An energy storage system, comprising one or more battery clusters connected in parallel, wherein each battery cluster comprises a plurality of battery modules according to any one of claims 1 to 4, and the plurality of battery modules are connected in series.
